# EUROPÄISCHE PATENTSCHRIFT

(11) **EP 0 995 940 B1**
(45) Veröffentlichungstag und Bekanntmachung des Hinweises auf die Patenterteilung: **24.11.2004**
(21) Anmeldenummer: 99116120.9
(22) Anmeldetag: 18.08.1999
(51) Int. Cl.: F16M 7/00

(54) **Anordnung zur Lagerung einer Maschine auf einem Untergrund und hierfür geeignete Spannpratze**
Device for supporting a machine on a base and tensioning clamp suitable therefor
Dispositif de support d'une machine sur une base et patte de tension destinée à cet effet

(30) Priorität: 23.10.1998 DE 29818948 U
(43) Veröffentlichungstag der Anmeldung: 26.04.2000
(73) Patentinhaber: Air Loc Schrepfer AG, 8700 Küsnacht (CH)
(72) Erfinder: Schrepfer, Rudolf, 8700 Küsnacht (CH)
(74) Vertreter: Hoffmann, Eckart, Dipl.-Ing.

(56) Entgegenhaltungen:
- DE-A- 2 414 630
- DE-U- 29 818 948

## Beschreibung

Die vorliegende Erfindung betrifft eine Anordnung zur Lagerung einer Maschine auf einem Untergrund. Die Erfindung betrifft ferner eine Spannpratze für eine solche Anordnung.

Maschinen werden häufig mit Hilfe von Nivellierschuhen (Nivellierelementen) auf einem Untergrund gelagert. Bei dem Untergrund handelt es sich um den Boden einer Fabrikhalle, ein Maschinenfundament oder dergleichen. Die Nivellierschuhe sind höhen- und/oder neigungsverstellbar. Mehrere über die Grundfläche der Maschine verteilt angeordnete Nivellierschuhe erlauben es, mögliche Unebenheiten des Untergrunds auszugleichen. Die Maschine weist in der Regel Maschinenfüße auf, die direkt oder über Verbindungsmittel auf der Oberseite eines jeweiligen Nivellierschuhs aufliegen und mit ihm verbunden sind.

Wenn an der zu lagernden Maschine keine Schwingungen auftreten, wirken auf die Nivellierschuhe lediglich senkrecht nach unten gerichtete Druckkräfte ein, welche die Nivellierschuhe gegen den Untergrund drücken. In solchen Fällen brauchen die Nivellierschuhe im allgemeinen weder in Vertikal- noch in Horizontalrichtung im oder am Untergrund verankert zu werden. Wenn die Maschine jedoch Schwingungen ausgesetzt ist, wie sie etwa von beweglichen Maschinenteilen verursacht werden können, dann können die Nivellierschuhe auch vertikal nach oben und/oder horizontal gerichteten Zugkräften ausgesetzt werden. In solchen Fällen kann eine Verankerung der Nivellierschuhe im oder am Untergrund erforderlich werden, um ein Wandern der Maschine mitsamt den Nivellierschuhen zu verhindern. Ziel einer solchen Verankerung muß es sein, den Nivellierschuh einer Verankerungskraft auszusetzen, die einer möglicherweise auftretenden Zugkraft entgegenwirkt und ein Abheben des Nivellierschuhs vom Untergrund bzw. sein Verschieben infolge solcher Zugkraft verhindert.

Zur wirkungsvollen Verankerung in Vertikalrichtung ist anzustreben, daß die Wirkungslinie der Verankerungskraft parallel zur Wirkungslinie der von der Maschine auf den Nivellierschuh ausgeübten vertikalen Zugkraft liegt oder gar mit ihr zusammenfällt. Wenn diese Wirkungslinien zu sehr gegeneinander versetzt sind, muß die Verankerungskraft entsprechend erhöht werden, oder der Nivellierschuh kann einem Kippmoment ausgesetzt werden. Die Einleitung der Verankerungskraft in den Nivellierschuh sollte daher möglichst im mittleren Bereich des Nivellierschuhs und somit an einer Stelle erfolgen, die nach dem Aufstellen der Maschine unter dem zugehörigen Maschinenfuß liegt. Hieraus ergeben sich solange keine Probleme, solange die Nivellierschuhe vorab verankert werden, das heißt, bevor die Maschine auf sie aufgesetzt wird. Mit der Verankerung ist dann allerdings die Lage der Nivellierschuhe relativ zueinander fixiert. Damit diese relative Lage exakt mit derjenigen der zugeordneten Maschinenfüße übereinstimmt, ist beim Aufstellen und Verankern der Nivellierschuhe eine sehr große Sorgfalt und Genauigkeit erforderlich. Diese vorab erfolgende Verankerung ist daher mit einem erheblichen Aufwand an Zeit und Kosten verbunden.

Bei einer nachträglichen Verankerung, also nach Aufstellen der Maschine, ist es andererseits schwierig, die Verankerung so auszubilden, daß die Wirkungslinie der Verankerungskraft möglichst nah bei derjenigen einer möglicherweise auftretenden Zugkraft liegt.

Eine aus Nivellierschuh und Verankerungseinrichtung bestehende Anordnung zur Lagerung einer Maschine ist im Handel erhältlich. Bei dieser bekannten Anordnung wird der Nivellierschuh mit Hilfe zweier bügelartiger Spannpratzen am Untergrund verankert. Beide Spannpratzen stützen sich mit einem Ende auf dem Nivellierschuh und mit dem anderen Ende auf dem Untergrund ab. Ein zwischen den beiden Enden angreifender Ankerbolzen befestigt die jeweilige Spannpratze am Untergrund. Dadurch wird der Nivellierschuh gegen den Untergrund verspannt. Die Angriffspunkte der beiden Spannpratzen an dem Nivellierschuh liegen etwa symmetrisch zu beiden Seiten einer vertikalen Mittelebene des Nivellierschuhs. Der Einsatz der Spannpratzen bei dieser bekannten Lagerungsanordnung erlaubt es einerseits, die Verankerungskraft nahe der optimalen Stelle in den Nivellierschuh einzuleiten, während andererseits der jeweilige Ankerbolzen deutlich gegenüber der Mitte des Nivellierschuhs versetzt sein kann. Bei der bekannten Lagerungsanordnung liegt allerdings der vom Ankerbolzen durchsetzte mittlere Bereich der Spannpratze über einem Randbereich des Nivellierschuhs. Der Ankerbolzen muß daher auch den Nivellierschuh selbst durchsetzen und unter dem Nivellierschuh in dem Untergrund verankert werden. Diese bekannte Lagerungsanordnung ist deshalb für eine nachträgliche Verankerung ihres Nivellierschuhs nicht geeignet. Dies ist umso mehr der Fall, als bei diesem Stand der Technik der Ankerbolzen gegenüber der Vertikalen geneigt ist, damit zwar sein in den Untergrund reichendes unteres Ende, nicht aber sein oberes Ende von dem Maschinenfuß überdeckt wird.

Aufgabe der vorliegenden Erfindung ist es, eine Anordnung zur Lagerung einer Maschine zu schaffen, bei der die Maschine unter Zwischenlage von Nivellierschuhen auf einem Untergrund gelagert ist, wobei die Nivellierschuhe auch noch nach dem Aufstellen der Maschine leicht und zuverlässig am Untergrund vertikal und horizontal verankert werden können, so daß dieselbe Art von Nivellierschuh je nach Bedarf mit oder ohne Verankerung verwendet werden kann. Eine weitere Aufgabe der Erfindung ist es, eine für die Verankerung eines Nivellierschuhs geeignete Spannpratze zu schaffen.

Diese Aufgabe wird erfindungsgemäß mit einer Anordnung gemäß Anspruch 1 bzw. einer Spannpratze gemäß Anspruch 13 gelöst. Vorteilhafte Weiterbildungen der Erfindung sind Gegenstand der abhängigen Ansprüche.

Bei dieser Lösung ist vorgesehen, daß jede von zwei Spannpratzen mit einem jeweiligen Zapfen in eine zugehörige Bohrung in einer Seitenfläche des Nivellierschuhs eingreift. Für den Einsatz in Verbindung mit der vorliegenden Erfindung eignen sich alle Nivellierschuhe, bei denen entsprechende Bohrungen in den Seitenflächen angebracht werden können. Im Gegensatz dazu erfordert der eingangs beschriebene Stand der Technik einen Nivellierschuh mit einem Randbereich, der Eingriffabschnitte für die Spannpratzen aufweist und, wenn keine Verankerung nötig ist, überflüssig, unter Umständen sogar störend ist.

Darüber hinaus befindet sich bei dem beschriebenen Stand der Technik dasjenige Ende der beiden Spannpratzen, das auf dem Untergrund aufliegt, unmittelbar angrenzend an den äußeren Rand des Nivellierschuhs, und der Ankerbolzen durchsetzt den Randbereich des Nivellierschuhs. Bei der vorliegenden Erfindung sind die Spannpratzen dagegen so bemessen, daß der Ankerbolzen außerhalb der Umgrenzung bzw. der Grundfläche des Nivellierschuhs die Spannpratze durchsetzt. Hierdurch wird ermöglicht, daß das zur Verankerung der Spannpratze im Untergrund erforderliche Loch nachträglich außerhalb des jeweiligen Maschinenfußes und im wesentlichen senkrecht zur Oberfläche des Untergrunds ausgebildet werden kann.

Weitere Vorteile und Merkmale der vorliegenden Erfindung ergeben sich aus der nachfolgenden Beschreibung von Ausführungsbeispielen unter Bezugnahme auf die beiliegenden schematischen Zeichnungen. Es zeigen:
- Fig. 1: eine Seitenansicht einer ersten Ausführungsform der Erfindung,
- Fig. 2: eine Draufsicht auf die erste Ausführungsform der Erfindung,
- Fig. 3: eine Seitenansicht einer zweiten Ausführungsform der Erfindung,
- Fig. 4: eine Seitenansicht einer dritten Ausführungsform der Erfindung, und
- Fig. 5: eine Draufsicht auf die dritte Ausführungsform der Erfindung.

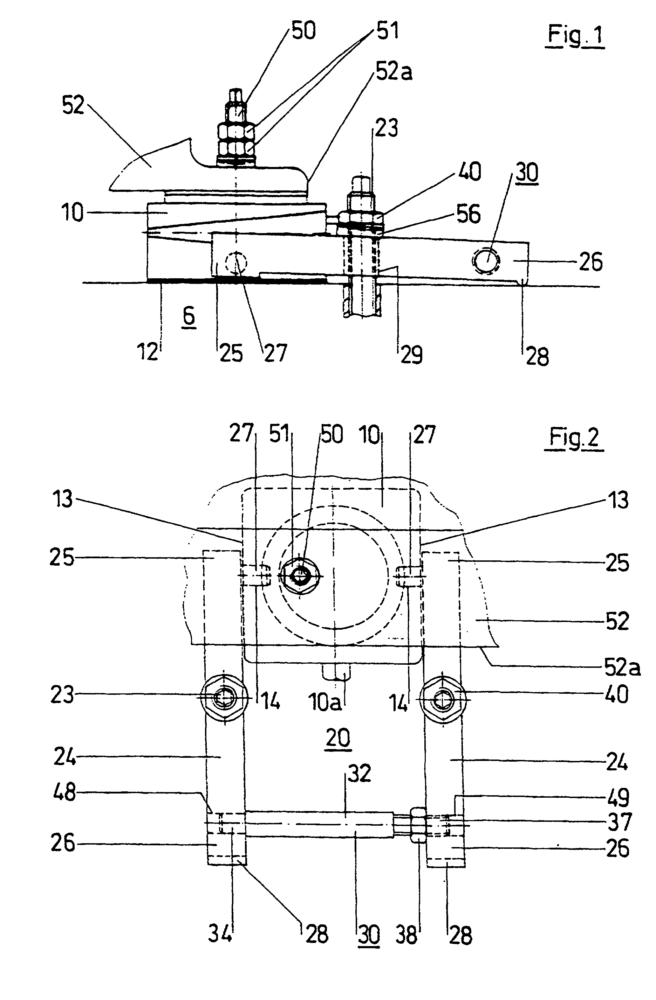

Unter Bezugnahme auf die Fig. 1 und 2 soll zunächst die erste Ausführungsform der Erfindung beschrieben werden.

Eine mit Hilfe der vorliegenden Erfindung auf einem Untergrund aufzustellende Maschine weist in der Regel mehrere Maschinenfüße auf, von denen in den Figuren lediglich ein Maschinenfuß 52 dargestellt ist. Es sei an dieser Stelle hervorgehoben, daß es für die vorliegende Erfindung ohne Bedeutung ist, ob es sich bei den Maschinenfüßen um Füße in Form einzelner Ansätze oder lediglich um Abschnitte eines Rahmenteiles handelt. Wie in Fig. 1 gezeigt, liegt der Maschinenfuß 52 auf der Oberseite eines Nivellierschuhs 10 auf, dessen Unterseite 12 auf dem Untergrund 6 liegt. Der Maschinenfuß ist mit Hilfe eines Gewindebolzens 50 und zugehörigen Muttern 51 an dem Nivellierschuh 10 befestigt.

Zur Erleichterung der weiteren Erläuterung beziehen sich Richtungs- und Orientierungsangaben auf die hier beispielhaft als horizontal angenommene Oberfläche des Untergrunds 6. Die Angabe "horizontal" im weiteren Verlauf der Beschreibung bezeichnet somit eine Ebene oder Richtung parallel zur Oberfläche des Untergrunds, während die Angabe "vertikal" eine Ebene oder Richtung senkrecht zur Oberfläche des Untergrunds bezeichnet.

Bei dem in den Zeichnungen als bevorzugtes Beispiel dargestellten Nivellierschuh 10 handelt es sich um einen quaderförmigen Körper mit nahezu quadratischer Grundfläche. Er setzt sich aus einem unteren, einem mittleren und einem oberen Keil zusammen, wie am besten aus Fig. 1 erkennbar. Durch Verschieben des mittleren Keils mittels einer Stellschraube 10a relativ zu dem oberen und dem unteren Keil kann die Oberseite des Nivellierschuhs 10 gegenüber dessen Unterseite 12 vertikal angehoben oder abgesenkt werden.

Wie aus den Figuren erkennbar, liegt der größte Teil des Nivellierschuhs 10 unterhalb des Maschinenfußes 52. Der Nivellierschuh 10 wird deshalb so angeordnet, daß seine Vorderfläche, von der der Kopf der Stellschraube 10a absteht, auf der Seite des vorderen Endes 52a des Maschinenfußes 52 liegt. Auf diese Weise kann die Stellschraube 10a nach dem Aufstellen der Maschine zum Höhenausgleich verstellt werden.

Zur bedarfsweisen nachträglichen Verankerung des Nivellierschuhs 10 dient eine Verankerungseinrichtung 20 mit zwei Verankerungselementen. Jedes Verankerungselement besteht aus einer Spannpratze 24 und einem Ankerbolzen 23. Die Spannpratze stützt sich einerseits am Nivellierschuh und andererseits am Untergrund ab. Zwischen diesen beiden Abstützpunkten wird die Spannpratze mit Hilfe des im Untergrund befestigten Ankerbolzens einer zum Untergrund hin gerichteten Kraft ausgesetzt. Dies hat eine auf den Nivellierschuh einwirkende Verankerungskraft zur Folge, die den Nivellierschuh an dem Untergrund verankert.

In den beiden gegenüberliegenden Seitenflächen 13 des Nivellierschuhs ist jeweils eine Bohrung 14 ausgebildet. Die Bohrungen sind vorzugsweise kollinear mit horizontal liegender Achse. Beim dargestellten Beispiel sind die Bohrungen im Bereich des unteren der drei Keile des Nivellierschuhs 10, also nahe der Unterseite 12 ausgebildet. Man kann davon ausgehen, daß eine über den Maschinenfuß auf den Nivellierschuh ausgeübte vertikale Zugkraft über den Gewindebolzen 50 in den Nivellierschuh 10 eingeleitet wird. Bei der dargestellten ersten Ausführungsform schneidet die Achse der Bohrungen 14 diejenige des Gewindebolzens 50. Das bedeutet, daß die Wirkungslinien der von den beiden Spannpratzen auf den Nivellierschuh ausgeübten Verankerungskräfte auf beiden Seiten der Wirkungslinie der Zugkraft liegen, und zwar mit letzterer in einer gemeinsamen vertikalen Ebene.

Die beiden Spannpratzen 24 sind, bezogen auf eine vertikale Mittelebene des Nivellierschuhs, im wesentlichen symmetrisch angeordnet und ihrerseits spiegelsymmetrisch ausgebildet. Bei der ersten Ausführungsform werden die Spannpratzen praktisch von geraden Stangen gebildet. Diese Stangen liegen im wesentlichen parallel zur jeweils zugehörigen der beiden Seitenflächen 13 des Nivellierschuhs 10 an dieser an. Im Bereich des einen Endes 25 jeder Stange steht ein zylindrischer (oder auch halbzylindrischer) Zapfen 27 senkrecht von derjenigen Seitenfläche der Stange ab, die der Seitenfläche 13 des Nivellierschuhs zugewandt ist. Der Zapfen 27 ist bezüglich seines Durchmessers und seiner Länge so bemessen, daß er in die Bohrung 14 in dieser Seitenfläche 13 paßt. Zu diesem Zweck ist der Durchmesser des Zapfens 27 geringfügig kleiner als derjenige der Bohrung 14, während seine axiale Länge gleich oder nur wenig kleiner als diejenige der Bohrungen 14 ist. Durch den Eingriff der Zapfen 27 in die Bohrungen 14 sind die Spannpratzen mit Ausnahme der Axialrichtung der Bohrungen formschlüssig mit dem Nivellierschuh 10 verbunden. Dadurch ist eine sichere Krafteinleitung von den Spannpratzen in den Nivellierschuh gewährleistet.

Im Bereich ihres anderen Endes 26 weisen die Spannpratzen 24 einen Auflageabschnitt 28 auf. Der Auflageabschnitt 28 ist als ein Vorsprung ausgebildet, der in Richtung auf den Untergrund 6 von der Stange absteht. Die Spannpratzen liegen mit diesem Auflageabschnitt auf dem Untergrund auf. Zwischen diesem Auflageabschnitt 28 einerseits und dem Zapfen 27 andererseits liegen die die Spannpratzen bildenden Stangen im Abstand über dem Untergrund 6. Die Spannpratzen können, je nach Höhe des Auflageabschnitts 28, mit nur geringer Schräglage oder sogar horizontal ausgerichtet sein.

Etwa in der Mine zwischen dem Vorsprung 27 und dem Auflageabschnitt 28 greift der Ankerbolzen an der jeweiligen Spannpratze an. An dieser Stelle weist die Stange ein Durchgangsloch 29 für den Ankerbolzen auf, das sich im wesentlichen senkrecht sowohl zur Längsrichtung der Stange als auch zur Achse des Zapfens 27 erstreckt.

Der Ankerbolzen ist an einer Stelle im Untergrund verankert, die nach dem Aufstellen der Maschine ohne weiteres zugänglich ist. Ein zur Befestigung des Ankerbolzens im Untergrund erforderliches Loch kann daher problemlos nachträglich hergestellt werden. Die spezielle Ausbildung des Ankerbolzens sowie die Art seiner Befestigung im Untergrund ist für die vorliegende Erfindung unwesentlich, solange die Verankerung des Ankerbolzens nachträglich erfolgen kann und der Ankerbolzen geeignet ist, eine ausreichende Kraft auf die zugehörige Spannpratze auszuüben. Als Ankerbolzen 23 ist in den Zeichnungen beispielhaft eine mittels eines Dübels verankerte Stiftschraube dargestellt. Bei ihr erfolgt die Verspannung mit Hilfe einer Mutter 40, die auf den über die Spannpratze nach oben ragenden Gewindeschaft der Stiftschraube aufgeschraubt ist. Anstelle einer Stiftschraube könnte auch eine Steinschraube verwendet werden, die ohne Dübel im Untergrund verankert werden kann. Auch Kopfschrauben, die zur Verspannung mehr oder minder in einen Dübel eingeschraubt werden, kommen grundsätzlich als Ankerbolzen in Betracht. Wenn die Achse des Ankerbolzens nicht rechtwinkelig zur Oberseite der Spannpratze verläuft, kann ein an sich bekanntes Kalottenausgleichselement 56 zwischen der Mutter 40 (bzw. dem Schraubenkopf im Fall einer Kopfschraube) und der Spannpratze angeordnet werden.

Wie aus der voranstehenden Beschreibung ohne weiteres verständlich und aus den Zeichnungen ersichtlich, sind der Nivellierschuh 10 (mit seinen seitlichen Bohrungen 14) sowie die Spannpratzen 24 so ausgebildet, daß eine Verankerung des Nivellierschuhs jederzeit nachträglich ausgeführt werden kann. Der Ankerbolzen 23 taucht in ausreichendem Abstand vor dem Nivellierschuh im wesentlichen vertikal in den Untergrund ein. Das hierfür erforderliche Loch im Untergrund kann daher leicht hergestellt werden, nachdem die Maschine bereits aufgestellt wurde. Der nachträglich problemlos durch einfaches Einstecken der Zapfen 27 in die Bohrungen 14 herstellbare formschlüssige Eingriff zwischen den Spannpratzen 24 und dem Nivellierschuh 10 gewährleistet eine sichere Kraftübertragung und eine allseitige, das heißt sowohl horizontale als auch vertikale Verankerung des Nivellierschuhs am Untergrund.

Die Verankerung in Horizontalrichtung kann gemäß einer vorteilhaften Weiterbildung der Erfindung noch verbessert werden. Diese Weiterbildung ist bei dem in den Figuren 1 und 2 gezeigten Ausführungsbeispiel bereits realisiert. Sie zeichnet sich dadurch aus, daß die beiden Spannpratzen im Bereich ihres jeweiligen zweiten Endes 26 auseinandergespreizt werden. Dadurch werden beide Spannpratzen um ihren jeweiligen Ankerbolzen 23 so verschwenkt, daß der Nivellierschuh im Bereich der ersten Enden 25 der Spannpratzen von diesen zangenartig eingeklemmt wird.

Eine hierfür geeignete Spreizvorrichtung 30 kann auf einfache Weise als Stab 32 ausgebildet sein, der an wenigstens einem Ende (hier an seinem in der Zeichnung rechts dargestellten Ende) einen Gewindeansatz 37 mit einer darauf sitzenden Schraubenmutter 38 aufweist. Am linken Stabende befindet sich ein Ansatz 34 mit geringerem Durchmesser als der mittlere Teil des Stabs. Der Ansatz 34 ist in eine entsprechende Bohrung, 48 in der Nähe des zweiten Endes 26 der linken Spannpratze 24 eingesetzt. Die zwischen dem mittleren Stabteil und dem Ansatz 34 gebildete Ringschulter stellt eine erste Stimfläche der Spreizvorrichtung dar, die sich an der Innenseitenfläche der linken Spannpratze abstützt. In ähnlicher Weise ist am rechten Stabende das freie Ende des Gewindeansatzes 37 in eine der Bohrung 48 gegenüberliegende Bohrung 49 in der rechten Spannpratze 24 eingesetzt. Die Schraubenmutter 38 bildet eine zweite Stirnfläche, mit der sich die Spreizvorrichtung an der rechten Spannpratze 24 abstützt. Durch Verdrehen der Schraubenmutter 38 kann der Abstand zwischen den beiden Stirnflächen der Spreizvorrichtung und damit der Abstand zwischen den beiden Spannpratzen an dieser Stelle vergrößert werden. Bei der dargestellten Spreizvorrichtung handelt es sich lediglich um ein seiner Einfachheit wegen bevorzugtes Beispiel. Generell können im Rahmen dieser Weiterbildung der Erfindung alle Vorrichtungen eingesetzt werden, die es erlauben, die beiden Spannpratzen zum Einklemmen des Nivellierschuhs an den dem Nivellierschuh abgewandten Enden auseinanderzudrücken. Es versteht sich von selbst, daß das Auseinanderspreizen vor dem endgültigen Festziehen der Muttern 40 erfolgen sollte.

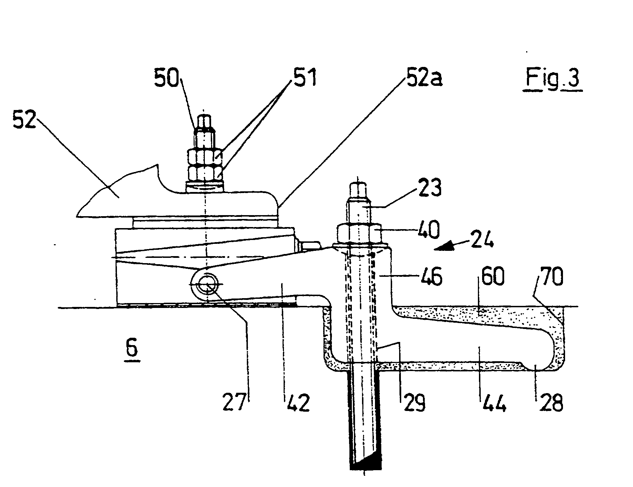

Fig. 3 zeigt eine zweite vorteilhafte Ausführungsform der vorliegenden Erfindung. Teile, die denen der Fig. 1 und 2 ähnlich sind, tragen die gleichen Bezugszahlen und werden nicht nochmals beschrieben. Die Erläuterungen zu der ersten Ausführungsform gelten für die zweite Ausführungsform in gleicher Weise, soweit sich aus der nachfolgenden Beschreibung nichts anderes ergibt. Im Gegensatz zur ersten Ausführungsform sind bei der zweiten Ausführungsform die Spannpratzen 24 zweifach abgewinkelt: Ein in Fig. 3 links dargestellten erster äußerer Schenkel 42 und ein rechts dargestellter zweiter äußerer Schenkel 44 sind im wesentlichen horizontal ausgerichtet. Ein dritter im wesentlichen vertikal ausgerichteter mittlerer Schenkel 46 liegt zwischen den beiden äußeren Schenkeln 42 und 44 und ist mit diesen einstückig verbunden. Der mittlere Schenkel 46 weist das Durchgangsloch 29 für den Ankerbolzen 23 auf. Wie aus Fig. 3 ersichtlich, schließen die beiden äußeren Schenkel 42, 44 in Axialrichtung des Durchgangslochs 29 (und damit des Ankerbolzens 23) so gegeneinander versetzt an den mittleren Schenkel 46 an, daß sie sich in Axialrichtung nicht überlappen. Wegen dieses Versatzes liegt die Unterkante des ersten äußeren Schenkels 42 oberhalb der Oberkante des zweiten äußeren Schenkels 44. Eine derart abgewinkelte Spannpratze 24 ermöglicht, daß ihr zweiter äußerer Schenkel 44 und der untere Teil des mittleren Schenkels 46 in einer entsprechenden Aussparung 70 des Untergrunds angeordnet werden. Nach der Montage der Verankerung kann dann der verbleibende Hohlraum in der Aussparung 70 beispielsweise mit Beton 60 aufgefüllt werden. Durch dieses Versenken des am weitesten vom Maschinenfuß 52 abstehenden Teils der Verankerungseinrichtung 20 wird der Gefahr begegnet, daß die Verankerungseinrichtung 20 zu einer Stolperschwelle für das Bedienungspersonal der Maschine wird.

Auch bei der zweiten Ausführungsform kann die Spreizvorrichtung 30 verwendet werden. Für sie müßte allerdings eine die Aussparungen 70 für die Spannpratzen 24 miteinander verbindende Aussparung vorgesehen werden. Es kann daher einfacher sein, im Bedarfsfall die dem Nivellierschuh abgewandten Enden innerhalb der jeweiligen Aussparungen 70 gesondert und zwar gegenüber der der jeweils anderen Aussparung 70 zugewandten Innenwand zu verspannen.

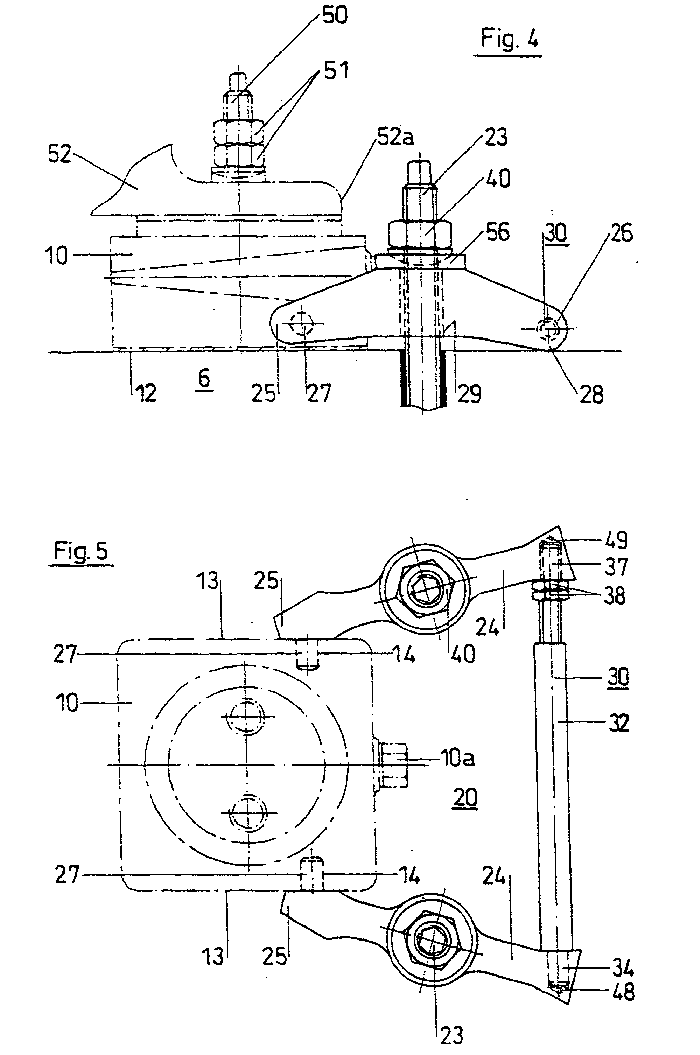

Fig. 4 und 5 zeigen eine dritte vorteilhafte Ausführungsform der vorliegenden Erfindung. Teile, die denen der Fig. 1 und 2 ähnlich sind, tragen die gleichen Bezugszahlen und werden nicht nochmals beschrieben. Die Erläuterungen zur ersten Ausführungsform gelten für die dritte Ausführungsform in gleicher Weise, soweit sich aus der nachfolgenden Beschreibung nichts anderes ergibt. Der Abstand vom einen Ende 25 der Spannpratze 24 zur Achse des in das Durchgangsloch 29 eingesetzten Ankerbolzens 23 und der Abstand von dieser Achse zum anderen Ende 26 definieren das Hebelverhältnis, mit dem die von der Mutter 40 auf die Spannpratze 23 ausgeübte Kraft auf den Nivellierschuh 10 zu dessen Fixierung am Untergrund 6 übertragen wird. Im Gegensatz zu den vorigen Ausführungsformen, bei denen sich das Durchgangsloch näher am Ende 25 als am Ende 26 befindet, ist bei dieser Ausführungsform das Durchgangsloch 29 für den Ankerbolzen 23 in der Mitte zwischen den beiden Enden 25 und 26 angeordnet. Damit kann dieses Hebelverhältnis verbessert und daher bei gegebener, auf die Spannpratze 23 ausgeübter Kraft ihr auf den Nivellierschuh 10 wirkender Anteil zu Lasten ihres auf den Auflageabschnitt 28 wirkenden Anteils erhöht werden. Diese versetzte Anordnung ist selbstverständlich auch bei den ersten beiden Ausführungsformen möglich.

Außerdem sind die Bohrungen 14 zur Aufnahme der Zapfen 13 gemäß Fig. 4 und 5 in Horizontalrichtung nicht in der Mitte der Seitenfläche 13 des Nivellierschuhs 10 angeordnet, sondern weiter rechts, d.h. näher an der Vorderseite, an der sich die Stellschraube 10a befindet. Dies ermöglicht es, die Spannpratze 24 bei gegebenem Hebelverhältnis kürzer zu bauen, als dies bei Anordnung in der Mitte der Seitenfläche 13 möglich ist. Dadurch wird die Gefahr noch weiter verringert, daß die Verankerungseinrichtung 20 zu einer Stolperschwelle für das Bedienungspersonal der Maschine wird.

Wie aus Fig. 4 ersichtlich, wird die Spannpratze 24 von ihren beiden Enden 25 und 26 aus gesehen zur Mitte hin kontinuierlich dicker. Dort greift der Ankerbolzen 23 an. Dies bringt den Vorteil, daß diese Ausführungsform bei relativ wenig zusätzlichem Material im Vergleich zur ersten Ausführungsform eine größere Festigkeit bezüglich des Durchbiegens der Spannpratze 24 nach unten besitzt.

Wenn beispielsweise Nivellierschuhe gemäß Fig. 2 entsprechend klein ausgebildet sind, kann das Problem auftreten, daß die beiden für die Ankerbolzen erforderlichen Ankerbohrungen einen derart kleinen Abstand voneinander aufweisen, daß die zulässige Ankerlast reduziert wird. Diesem Problem kann dadurch begegnet werden, daß die beiden auf dem Boden aufliegenden Enden 26 gemäß Darstellung in Fig. 5 einen größeren Abstand voneinander aufweisen als die gegenüberliegenden Enden 25. In anderen Worten sind die Ankerpratzen 24 nicht parallel zueinander. Vielmehr sind die Ankerpratzen 24 unter einem Winkel zueinander angeordnet, derart, daß der Abstand der Ankerbolzen 23 und damit der Ankerbohrungen im Vergleich zu einer parallelen Anordnung vergrößert wird. Selbstverständlich kann der Winkel der in Fig. 5 gezeigten Anordnung an die jeweiligen Erfordernisse beim Verankern der Nivellierschuhe angepaßt werden.

Die oben beschriebene Spreizvorrichtung 30 kann auch bei der dritten Ausführungsform eingesetzt werden. Wenn bei einer der obigen Ausführungsformen zum nachträglichen Verankern eines Nivellierschuhs zuerst die Zapfen 27 in die Bohrungen 41 eingesetzt und die Enden 26 der Spannpratzen 24 mittels dieser Spreizvorrichtung gespreizt werden, dann werden dadurch die Zapfen 27 in den zweckmäßigerweise relativ eng tolerierten Bohrungen 14 verspannt. Damit können die Spannpratzen 24 in der gewünschten Position fixiert werden. Dies erleichtert das anschließende Bohren und Setzen von sogenannten chemischen Ankern, weil dadurch ein Herausgleiten der Zapfen 27 verhindert wird. Derartige chemische Ankern, die auch als "Reaktionsanker" bekannt sind, sind spreizdruckfrei und erlauben geringe Achs- und Randabstände.

Alle beschriebenen Ausführungsformen weisen den Vorteil auf, daß die Ankerbolzen vertikal im Untergrund verankerbar sind. Bei Verankerung mit schräg einzusetzenden Ankerbolzen würde bei deren Spannen gleichzeitig eine Horizontalkraft auf den Nivellierschuh wirken, weshalb dieser mittels einer zusätzlichen, vertikalen Verankerung gegen eine Horizontalbewegung gesichert werden müßte.

Es sei betont, daß es sich bei den vorstehend beschriebenen Ausführungsformen um Beispiele, wenn auch bevorzugte Beispiele, handelt, die in vielfältiger Weise abgewandelt werden können. So können die Ankerbolzen 23 statt als Gewindebolzen beispielsweise auch als Klemmechanismus ausgebildet sein, der nicht die Spannpratzen 24 in den Durchgangslöchem 29 durchsetzt, sondern seitlich der Spannpratze 24 angeordnet ist und diese beispielsweise mittels einer Schelle nach unten spannt.

## Patentansprüche

1. Anordnung zur Lagerung einer Maschine auf einem Untergrund (6), umfassend
einen Nivellierschuh (10) mit einer Oberseite zum Abstützen der Maschine, einer Unterseite (12) zur Auflage auf dem Untergrund sowie Seitenflächen (13) zwischen der Unterseite (12) und der Oberseite, und
eine Verankerungseinrichtung (20) mit zwei Verankerungselementen zur Verankerung des Nivellierschuhs (10) an dem Untergrund,
wobei der Nivellierschuh (10) im Bereich zweier einander gegenüberliegender Seitenflächen (13) jeweils eine Ausnehmung (14) für den Eingriff mit einem jeweiligen der Verankerungselemente aufweist,
wobei die Verankerungselemente je eine Spannpratze (24) und einen Ankerbolzen (23) aufweisen, von denen die Spannpratze (24) im Bereich eines ersten (25) ihrer beiden Enden (25, 26) einen Vorsprung (27) zum Eingriff in eine zugehörige der Ausnehmungen (14) und im Bereich ihres zweiten Endes (26) einen Auflageabschnitt (28) zur Auflage auf dem Untergrund (6) aufweist, und der Ankerbolzen (23) zwischen dem Vorsprung (27) und dem Auflageabschnitt (28) an der Spannpratze (24) angreift und im Untergrund (6) verankerbar ist,
wobei die Ausnehmungen (14) als Bohrung in der jeweiligen Seitenfläche (13) ausgebildet sind, wobei die Achsen der Bohrungen in einer zur Unterseite (6) im wesentlichen parallelen Ebene liegen,
wobei die Vorsprünge (27) als Zapfen ausgebildet sind, deren Durchmesser geringfügig kleiner als derjenige der Bohrungen ist, und
wobei jede der Spannpratzen (24) so bemessen ist, daß, wenn der Zapfen in die Bohrung gesteckt ist, die Angriffsstelle der Spannpratze (24), an der der Ankerbolzen (23) an ihr angreift, außerhalb der Umgrenzung des Nivellierschuhs (10) liegt derart, daß der Ankerbolzen (23), ohne den Nivellierschuh (10) zu durchsetzen, mit zur Unterseite (12) des Nivellierschuhs (10) im wesentlichen senkrechter Axialrichtung im Untergrund (6) verankerbar ist.

2. Anordnung nach Anspruch 1, **dadurch gekennzeichnet, daß** die Achsen der Bohrungen (14) kollinear sind.

3. Anordnung nach Anspruch 1 oder 2, **dadurch gekennzeichnet, daß** die Achsen der Bohrungen (14) senkrecht zu den Seitenflächen (13) verlaufen und die Zapfen (27) senkrecht von den Spannpratzen (24) abstehen.

4. Anordnung nach einem der vorhergehenden Ansprüche, **dadurch gekennzeichnet, daß** die Spannpratzen (24) jeweils ein Durchgangsloch (29) aufweisen, durch welches sich der zugehörige Ankerbolzen (23) erstreckt.

5. Anordnung nach Anspruch 4, **dadurch gekennzeichnet, daß** zwischen den beiden Spannpratzen (24) im Bereich des jeweiligen zweiten Endes (26) eine Spreizvorrichtung (30) zum Auseinanderspreizen der Spannpratzen in diesem Bereich vorgesehen ist.

6. Anordnung nach Anspruch 5, **dadurch gekennzeichnet, daß** die Spreizvorrichtung (30) als Stab (32) ausgebildet ist, der sich an seinem einen Ende mit einer Stirnfläche an einer Seitenfläche der einen Spannpratze (24) und an seinem anderen Ende mit einer anderen Stimfläche an der gegenüberliegenden Seitenfläche der anderen Spannpratze (24) abstützt, wobei der Abstand zwischen den beiden Stirnflächen verstellbar ist.

7. Anordnung nach Anspruch 6, **dadurch gekennzeichnet, daß** der Stab wenigstens an einem seiner beiden Enden mit einem Außengewinde (37) versehen ist, auf das eine die entsprechende Stirnfläche bildende Mutter geschraubt ist und dessen Ende in eine Bohrung (49) in der Seitenfläche der angrenzenden Spannpratze aufgenommen ist.

8. Anordnung nach einem der Ansprüche 4 bis 7, **dadurch gekennzeichnet, daß** die Spannpratzen (24) jeweils aus einem mittleren Schenkel (46) und zwei mit diesem einstückig verbundenen äußeren Schenkeln (42, 44) bestehen, daß das Durchgangsloch (29) in dem mittleren Schenkel (46) ausgebildet ist, und daß die beiden äußeren Schenkel (42, 44) bezogen auf die Achse des Durchgangsloches (29) einander diametral gegenüberliegen und ohne Überlappung in Axialrichtung gegeneinander versetzt sind.

9. Anordnung nach einem der vorhergehenden Ansprüche, **dadurch gekennzeichnet, daß** die Angriffsstelle des Ankerbolzens (23) an der Spannpratze (24) im wesentlichen den gleichen Abstand vom Vorsprung (27) und vom Auflageabschnitt (28) aufweist.

10. Anordnung nach einem der vorhergehenden Ansprüche, **dadurch gekennzeichnet, daß** die Bohrungen (14) gegenüber der Mitte der jeweiligen Seitenfläche (13) in Richtung auf die den Ankerbolzen (23) zugewandte Vorderfläche des Nivellierschuhs (10) versetzt sind.

11. Anordnung nach einem der vorhergehenden Ansprüche, **dadurch gekennzeichnet, daß** die zweiten Enden (26) der Spannpratze (24) einen größeren Abstand voneinander aufweisen als deren erste Enden (25).

12. Anordnung nach einem der vorhergehenden Ansprüche, **dadurch gekennzeichnet, daß** die Dicke der Spannpratze (24), gemessen in der Richtung der Achse des an ihr angreifenden Ankerbolzens (23) von jedem der beiden Enden (25, 26) aus zur Angriffsstelle des Ankerbolzens (23) hin zunimmt.

13. Spannpratze zur Verankerung eines der Lagerung einer Maschine auf einem Untergrund dienenden Nivellierschuhs (10), mit einem mittleren Schenkel (46) und einem ersten sowie einem zweiten äußeren Schenkel (42, 44), die mit diesem einstückig verbunden sind, wobei in dem mittleren Schenkel (46) ein Durchgangsloch (29) ausgebildet ist, die beiden äußeren Schenkel (42, 44) bezogen auf die Achse des Durchgangsloches (29) einander diametral gegenüberliegen, und im Bereich des dem mittleren Schenkel (46) abgewandten Endes des ersten äußeren Schenkels ein Vorsprung (27) ausgebildet ist,
wobei die beiden äußeren Schenkel (42, 44) ohne Überlappung in Axialrichtung des Durchgangslochs (29) gegeneinander versetzt sind, der Vorsprung (27) als Zapfen im wesentlichen senkrecht zur Achse des Durchgangsloches (29) und zu einer Linie ausgebildet ist, längs derer sich die beiden äußeren Schenkel diametral gegenüberliegen, und der zweite äußere Schenkel (44) so ausgebildet ist, daß sein dem mittleren Schenkel abgewandtes Ende den in Axialrichtung des Durchgangslochs (29) am weitesten von der Achse des Zapfens (27) beabstandeten Punkt des zweiten äußeren Schenkels darstellt.

## Claims

1. An arrangement for mounting a machine on a foundation (6), comprising
a levelling shoe (10) having a top side for supporting the machine, an underside (12) for resting on the foundation and side surfaces (13) between the underside (12) and the top side, and
an anchorage device (20) having two anchorage elements for anchoring the levelling shoe (10) to the foundation,
wherein in the region of two mutually oppositely disposed side surfaces (13) the levelling shoe (10) has a respective opening (14) for engagement with a respective one of the anchorage elements,
wherein the anchorage elements each have a clamping claw (24) and an anchor bolt (23) of which the clamping claw (24) has in the region of a first one (25) of its two ends (25, 26) a projection (27) for engagement into an associated one of the openings (14) and in the region of its second end (26) a support portion (28) for resting on the foundation (6), and the anchor bolt (23) engages the clamping claw (24) between the projection (27) and the support portion (28) and can be anchored in the foundation (6),
wherein the openings (14) are in the form of a bore in the respective side surface (13), wherein the axes of the bores are in a plane which is substantially parallel to the underside (6),
wherein the projections (27) are in the form of pins whose diameter is slightly smaller than that of the bores, and
wherein each of the clamping claws (24) is so dimensioned that, when the pin is fitted into the bore, the engagement location of the clamping claw (24) at which the anchor bolt (23) engages the clamping claw lies outside the boundary of the levelling shoe (10) in such a way that, without passing through the levelling shoe (10), the anchor bolt (23) can be anchored in the foundation (6), with an axial direction which is substantially perpendicular to the underside (12) of the levelling shoe (10).

2. An arrangement according to claim 1 **characterised in that** the axes of the bores (14) are collinear.

3. An arrangement according to claim 1 or claim 2 **characterised in that** the axes of the bores (14) extend perpendicularly to the side surfaces (13) and the pins (27) project perpendicularly from the clamping claws (24).

4. An arrangement according to one of the preceding claims **characterised in that** the clamping claws (24) each have a respective through hole (29) through which the associated anchor bolt (23) extends.

5. An arrangement according to claim 4 **characterised in that** provided between the two clamping claws (24) in the region of the respective second end (26) is a spreading device (30) for spreading the clamping claws apart **in that** region.

6. An arrangement according to claim 5 **characterised in that** the spreading device (30) is in the form of a rod (32) which at its one end bears with an end face against a side surface of the one clamping claw (24) and which at its other end bears with another end face against the oppositely disposed side surface of the other clamping claw (24), wherein the spacing between the two end faces is adjustable.

7. An arrangement according to claim 6 **characterised in that** the rod is provided at at least one of its two ends with a male screwthread (37) onto which is screwed a nut forming the corresponding end face, the end of the male screwthread being received in a bore (49) in the side surface of the adjoining clamping claw.

8. An arrangement according to one of claims 4 to 7 **characterised in that** the clamping claws (24) each comprise a central limb (46) and two outer limbs (42, 44) which are integrally connected thereto, the through hole (9) is provided in the central limb (46), and the two outer limbs (42, 44) are in mutually diametrally opposite relationship with respect to the axis of the through hole (29) and are displaced relative to each other without overlap in the axial direction.

9. An arrangement according to one of the preceding claims **characterised in that** the engagement location of the anchor bolt (23) on the clamping claw (24) is at substantially the same spacing from the projection (27) and from the support portion (28).

10. An arrangement according to one of the preceding claims **characterised in that** the bores (14) are displaced with respect to the centre of the respective side surface (13) in a direction towards the front surface of the levelling shoe (10), which front surface is towards the anchor bolt (23).

11. An arrangement according to one of the preceding claims **characterised in that** the second ends (26) of the clamping claw (24) are at a greater spacing from each other than their first ends (25).

12. an arrangement according to one of the preceding claims **characterised in that** the thickness of the clamping claw (24), as measured in the direction of the axis of the anchor bolt (23) engaging same, increases from each of the two ends (25, 26) towards the engagement location of the anchor bolt (23).

13. A clamping claw for anchoring a levelling shoe (10) which serves for mounting a machine on a foundation, comprising a central limb (46) and first and second outer limbs (42, 44) which are integrally connected thereto, wherein provided in the central limb (46) is a through hole (29), the two outer limbs (42, 44) are in mutually diametrally opposite relationship with respect to the axis of the through hole (29) and a projection (27) is provided in the region of the end of the first outer limb, which is remote from the central limb (46),
wherein the two outer limbs (42, 44) are displaced relative to each other without overlap in the axial direction of the through hole (29), the projection (27) is in the form of a pin substantially perpendicularly to the axis of the through hole (29) and to a line along which the two outer limbs are in diametrally opposite relationship, and the second outer limb (44) is of such a configuration that its end remote from the central limb represents the point of the second outer limb, which is furthest spaced from the axis of the pin (27) in the axial direction of the through hole (29).

## Revendications

1. Dispositif pour installer une machine sur un bâti (6), comprenant un patin de nivellement (10) avec une face supérieure pour tenir la machine, une face inférieure (12) pour le positionnement sur le bâti, ainsi que des faces latérales (13) entre la face inférieure (12) et la face supérieure, et
un dispositif d'ancrage (20) avec deux éléments d'ancrage pour ancrer le patin de nivellement (10) sur le bâti,
le patin de nivellement (10), dans la zone de deux faces latérales (13) en regard l'une de l'autre, présentant un évidement (14) pour l'engagement avec l'un des éléments d'ancrage respectifs,
les éléments d'ancrage présentant chacun une griffe de serrage (24) et un boulon d'ancrage (23), la griffe de serrage (24), dans la zone d'une première (25) de ses deux extrémités (25, 26) présentant une saillie (27) susceptible de s'engager dans l'un associé des évidements (14), et dans la zone de sa deuxième extrémité (26) un segment de positionnement (28) pour le positionnement sur le bâti (6), et le boulon d'ancrage (23) intervenant entre la saillie (27) et le segment de positionnement (28) sur la griffe de serrage (24) et pouvant être ancré dans le bâti (6),
les évidements (14) étant des alésages dans la face latérale (13) respective, les axes des alésages se situant dans un plan sensiblement parallèle à la face inférieure (6),
les saillies (27) étant des embouts dont le diamètre est légèrement inférieur à celui des alésages, et
chacune des griffes de serrage (24) étant dimensionnée de telle sorte que si l'embout est inséré dans l'alésage, le point d'intervention de la griffe de serrage (24) auquel intervient le boulon d'ancrage (23) sur celle-ci se situe à l'extérieur de l'entourage du patin de nivellement (10) de manière à ce que le boulon d'ancrage (23), sans traverser le patin de nivellement (10), puisse être ancré dans le bâti (6) dans une direction axiale pour l'essentiel verticale par rapport à la face inférieure (12) du patin de nivellement (10).

2. Dispositif selon la revendication 1, **caractérisé en ce que** les axes des alésages (14) sont colinéaires.

3. Dispositif selon la revendication 1 ou 2, **caractérisé en ce que** les axes des alésages (14) s'étendent perpendiculairement aux faces latérales (13) et les embouts (27) saillent perpendiculairement depuis les griffes de serrage (24).

4. Dispositif selon l'une quelconque des revendications précédentes, **caractérisé en ce que** les griffes de serrage (24) présentent respectivement un trou de passage (29) dans lequel s'étend le boulon d'ancrage (23) associé.

5. Dispositif selon la revendication 4, **caractérisé en ce qu'**entre les deux griffes de serrage (24), dans la zone de la deuxième extrémité (26) respectivement, un dispositif d'écartement (30) est prévu pour écarter les griffes de serrage dans cette zone.

6. Dispositif selon la revendication 5, **caractérisé en ce que** le dispositif d'écartement (30) est une tige (32), qui par l'une de ses extrémités prend appui par une face frontale contre une face latérale de l'une des griffes de serrage (24), et par l'autre de ses extrémités par une autre face frontale contre la face latérale opposée de l'autre griffe de serrage (24), la distance entre les deux faces frontales étant réglable.

7. Dispositif selon la revendication 6, **caractérisé en ce que** la tige, du moins à l'une de ses extrémités, est munie d'un filet mâle (37) sur lequel est vissé un écrou formant la face frontale correspondante, et dont l'extrémité est reçue dans un alésage (49) dans la face latérale de la griffe de serrage adjacente.

8. Dispositif selon l'une quelconque des revendications 4 à 7, **caractérisé en ce que** les griffes de serrage (24) sont respectivement composées d'une branche centrale (46) et de deux branches extérieures (42, 44) formant une seule pièce avec celle-ci, **en ce que** le trou de passage (29) est formé dans la branche centrale (46), et **en ce que** les deux branches extérieures (42, 44), par rapport à l'axe du trou de passage (29), sont placées de manière diamétralement opposée l'une à l'autre et décalées l'une par rapport à l'autre sans chevauchement dans la direction axiale.

9. Dispositif selon l'une quelconque des revendications précédentes, **caractérisé en ce que** le point d'intervention du boulon d'ancrage (23) au niveau de la griffe de serrage (24) présente pour l'essentiel la même distance par rapport à la saillie (27) et au segment de positionnement (28).

10. Dispositif selon l'une quelconque des revendications précédentes, **caractérisé en ce que** les alésages (4) sont décalés par rapport au centre de la face latérale (13) respective en direction de la face frontale du patin de nivellement (10) tournée vers le boulon d'ancrage (23).

11. Dispositif selon l'une quelconque des revendications précédentes, **caractérisé en ce que** les deuxièmes extrémités (26) de la griffe de serrage (24) présentent une plus grande distance l'une par rapport à l'autre que leurs premières extrémités (25).

12. Dispositif selon l'une quelconque des revendications précédentes, **caractérisé en ce que** l'épaisseur de la griffe de serrage (24), mesurée en direction de l'axe du boulon d'ancrage (23) intervenant sur celle-ci, augmente à partir de chacune des deux extrémités (25, 26) vers le point d'intervention du boulon d'ancrage (23).

13. Griffe de serrage pour l'ancrage d'un patin de nivellement (10) servant à installer une machine sur un bâti, comprenant une branche centrale (46) et une première ainsi qu'une deuxième branches extérieures (42, 44) formant une seule pièce avec celle-ci, un trou de passage (29) étant formé dans la branche centrale (46), les deux branches extérieures (42, 44), par rapport à l'axe du trou de passage (29), étant placées de manière diamétralement opposée l'une à l'autre et, dans la zone de l'extrémité de la première branche extérieure opposée à la branche centrale (46), une saillie (27) étant formée,
les deux branches extérieures (42, 44) étant décalées l'une par rapport à l'autre sans chevauchement en direction axiale du trou de passage (29), la saillie (27) étant un embout formé pour l'essentiel perpendiculairement à l'axe du trou de passage (29) et à une ligne le long de laquelle les deux branches extérieures sont opposées de l'une à l'autre diamétralement, et la deuxième branche extérieure (44) étant configurée de manière à ce que son extrémité opposée à la branche centrale représente le point de la deuxième branche extérieure le plus éloigné, dans le sens axial du trou de passage (29), de l'axe de l'embout (27).
